# EUROPEAN PATENT APPLICATION

(11) **EP 0 776 871 A1**
(43) Date of publication of application: **04.06.1997**
(21) Application number: 97100310.8
(22) Date of filing: 02.02.1995
(51) Int. Cl.: C04B 35/486, F16C 33/24, C22C 33/02, C22C 32/00, F16J 10/04

(54) **Low frictional composite material for sliding member**

(30) Priority: 03.02.1994 JP 31839/94; 25.11.1994 JP 315476/94; 28.11.1994 JP 317621/94
(62) Divisional of application: 95101420.8
(71) Applicant: Isuzu Ceramics Research Institute Co., Ltd., Fujisawa-shi, Kanagawa-ken, 252 (JP)
(72) Inventor: Kita, Hideki, Fujisawa-shi, Kanagawa-ken, 251 (JP); Kawamura, Hideo, Kouza-gun, Kanagawa-ken, 253-01 (JP); Unno, Yasuaki, Yamato-shi, Kanagawa-ken, 242 (JP)
(74) Representative: Niedmers, Ole, Dipl.-Phys.

(57) **Abstract**

The invention relates to a low frictional composite material for a sliding member comprising a sintered substance, which mainly includes cerium stabilized zirconia (CeO₂ stabilized ZrO₂), α-alumina (α-Al₂O₃), and lanthanum β-alumina (La₂O₃β-Al₂O₃), and further includes 5 to 3O wt% of iron oxide.

## Description

### DETAILED DESCRIPTI0N 0F THE INVENTI0N

### Industrial applicability

The present invention relates to a low frictional composite material used for a sliding member to be used together with a lubricating oil.

### Prior Art

For a sliding member which is relatively slidably moved under a lubricant such as a cylinder and a piston of the engine, it is required that a wear resistance is excellent and a frictional coefficient or coefficient of friction during sliding is small. To make the frictional coefficient less, it is demanded that the sliding member has a good wettability for lubricating oil. For the frictional characteristic (to minimize a frictional loss) of the sliding member used together with the lubricating oil, it is effective to use a material having a good wettability for oil on the surface of the sliding member in a boundary lubricating area and in a mixed lubricating area but is not effective in a fluid lubricating area.

The wear resistant material disclosed in JN Patent Laid-0pen No. 62-127454 is a composite sintered substance comprising 5 to 25 wt% of oxide, 2 to 15 wt% of graphite, and the balance, iron, which cannot exhibit the wear resistance and the low frictional property in both lubricating areas as described above. In the aforementioned wear resistant material, said oxide is ceramics such as alumina, and therefore, the ceramics is reacted with a component of detergent contained in the lubricating oil to impede the formation of an oil film by the component of the detergent adhered to the surface of the wear-resistant material, thus increasing the frictional coefficient during sliding.

In the low frictional composite material disclosed in JN Patent Laid-0pen No. 63-139O44 and JN Patent Laid-0pen No. 4-238861, a green body is formed from a mixture of a cerium stabilized zirconia powder and a lanthanum β-alumina powder. The green body is sintered at a temperature above 16OO ^{o}C, and a needle like grain of the lanthanum β-alumina is allowed to grow to thereby enhance the fracture toughness. However, the aforementioned low frictional composite material is excellent in the wear resistance but is not sufficient in the low friction property. Further, it is necessary to sinter green body of said material at a high temperature above 16OO ^{o}C in order to grow the needle like grain of the lanthanum β-alumina, leading to a difficulty of increasing time and cost.

### Problem to be solved by the Invention

In view of the aforementioned problems, it is an object of the present invention to provide a low frictional composite material for a sliding member which is high in mechanical strength and fracture toughness, small in frictional coefficient, excellent in wear resistance, and which can be sintered at a relatively low temperature.

It is a further object of the present invention to provide a low frictional composite material for a sliding member, which is combined so as to exhibit a low frictional property and a wear resistance corresponding to a boundary lubricating area, a mixed lubricating area and a fluid lubricating area of the surface of the sliding member.

### Means for solving the problem

For achieving the above-described object, the construction of the present invention is as in claims.

### Function

The low frictional composite material for a sliding member using zirconia according to the present invention can be sintered at a lower temperature than that of a conventional composite sintered substance with cerium stabilized zirconia and lanthanum β-alumina, in which an iron oxide contained in the low frictional composite material enhances the adsorption property and wettability to reduce a frictional coefficient as the sliding member.

In the low frictional composite material for a sliding member according to the present invention, since an iron oxide of less than 17.5 wt% is contained in a matrix of iron, a component of detergent contained in a lubricating oil is hard to be adhered to the surface of the low frictional composite material. Accordingly, a stabilized oil film is formed on the surface of the low frictional composite material to make small the frictional coefficient as the sliding member.

The low frictional composite material for a sliding member according to the present invention is selected corresponding to a boundary lubricating area (including a mixed lubricating area) and a fluid lubricating area.

That is, in the boundary and mixed lubricating areas of the sliding member, a material which is small in a contact angle with respect to a lubricating oil and has a good wettability is disposed, while in the fluid lubricating area of the sliding member, a material which is large in a contact angle with respect to a lubricating oil and has a poor wettability is disposed to thereby minimize the frictional coefficient with respect to the whole surface of the sliding member.

### FIRST EMB0DIMENT

The present invention will be described hereinbelow in detail referring to Examples.

First, a low frictional composite material used for a sliding member according to Example 1 of the present invention is a sintered body which is prepared by adding 15 wt% of α-alumina (α-Al₂O₃) and 5 wt% of lanthanum β-alumina (La₂O₃β-Al₂O₃, now call this LBA) to cerium stabilized zirconia (CeO₂) to prepare a raw powder of LBA/CeO₂ stabilized ZrO₂ composite oxide, and adding 1O wt% of iron oxide to the raw powder of LBA/CeO₂ stabilized ZrO₂ composite oxide to prepare a green body (sample) by CIP (cold isostatis press), said green body being sintered at a temperature of from 13OO to 16OO ^{o}C.

As a Comparative Example, a sintered body was prepared by molding a green body by CIP from a material in which the iron oxide is not added (an addition amount of iron oxide is O wt%) to the raw powder of LBA/CeO₂ stabilized ZrO₂ composite oxide, said green body (sample) being sintered at a temperature of from 13OO to 16OO ^{o}C.

Table 1 shows the measured results of the porosity, the 4-point bending strength and the fracture toughness, with respect to the sintered body according to the present invention and the sintered body according to the Comparative Example. It is found from Table 1 that when the sintered body in which the iron oxide as added to the LBA/CeO₂ stabilized ZrO₂ composite oxide is compared with the sintered body without addition, the sintered body according to the present invention whose sinteringtemperature is low is small in the porosity and high in the 4-point bending strength and the fracture toughness.

**Table 1**

| sintering temp. ^{o}C | content of oxide of Fe wt% | porosity % | bending strength Mpa | fracture toughness Mpa m^{1/2} |
|---|---|---|---|---|
| 13OO | O | 1O.7 | 22O | 3.4 |
| 13OO | 1O | 1.2 | 48O | 8.4 |
| 14OO | O | 5.5 | 3OO | 4.2 |
| 14OO | 1O | 1.O | 53O | 9.5 |
| 15OO | O | 2.1 | 42O | 7.8 |
| 15OO | 1O | O.8 | 5OO | 9.1 |
| 16OO | O | O.9 | 51O | 8.9 |
| 16OO | 1O | 3.8 | 31O | 4.4 |

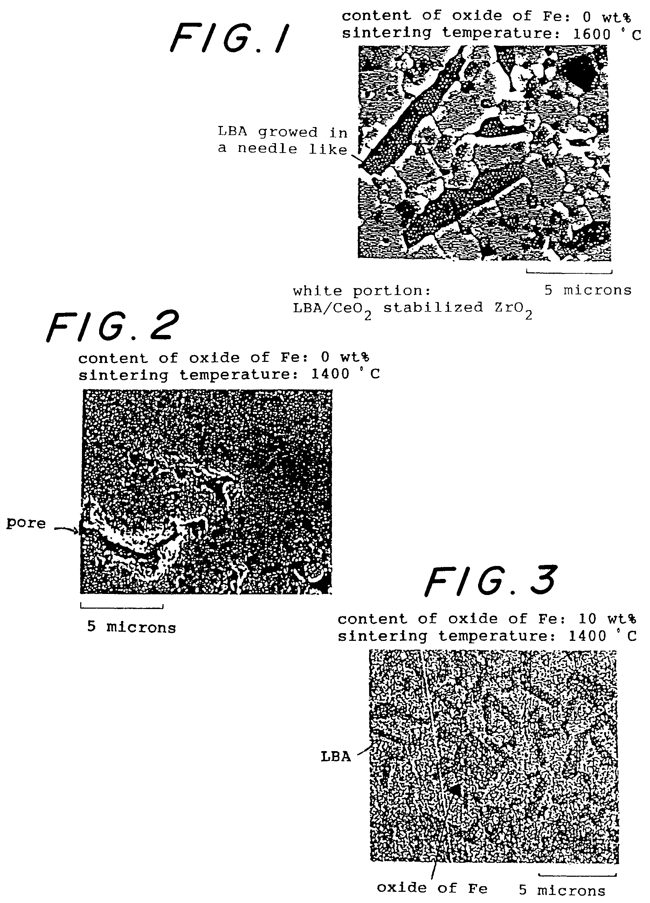

Fig. 1 shows the structure of the sintered body obtained by sintering the green body (an addition amount of iron oxide is O wt%) in which the iron oxide is not added to the LBA/CeO₂ stabilized ZrO₂ composite oxide at a temperature of 16OO ^{o}C. Fig. 2 shows the structure of the sintered body obtained by sintering the green body (the iron oxide is O wt%) in which the iron oxide is not added to the CeO₂ stabilized ZrO₂/LBA composite oxide at a temperature of 14OO ^{o}C. Fig. 3 shows the structure of the sintered body obtained by sintering the green body in which 1O wt% of the iron oxide is added to the LBA/CeO₂ stabilized ZrO₂ composite oxide according to the present invention at a temperature of 14OO ^{o}C.

In the sintering body shown in Fig. 1, LBA grows in a needle like and the LBA seems to enhance the mechanical properties. However, in the sintering body shown in Fig. 2, the sintering temperature is so low, 14OO ^{o}C, that LBA does not grow in needle like grains. Obviously, many pores are present.

0n the other hand, in the sintered body according to the present invention, though the sintering temperature is 14OO ^{o}C, LBA grows in needle like grains the pores are also small. Accordingly, it is assumed in the sintered body according to the present invention that by the addition of the iron oxide, the sintering property of the LBA/CeO₂ stabilized ZrO₂ composite oxide was improved, and the porosity, the 4-point bending strength and the fracture toughness of the sintered body was improved.

Next, a low frictional composite material used for a sliding member according to Example 2 of the present invention is a sintered substance which is prepared by producing several kinds of green bodies (samples) by CIP from a material in which O - 4O wt% (except O wt%) of an iron oxide is added to a raw powder of LBA/CeO₂ stabilized ZrO₂ composite oxide used in Example 1, each of the green bodies being sintered at a temperature of about 14OO ^{o}C.

Table 2 shows the measured results of the porosity, the 4-point bending strength and the fracture toughness, with respect to the sintered bodies (samples) with the addition amount of

**Table 2**

| content of oxide of Fe wt% | porosity % | bending strength Mpa | fracture toughness Mpa m^{1/2} |
|---|---|---|---|
| O | 5.5 | 3OO | 4.2 |
| 5 | 3.8 | 48O | 7.5 |
| 1O | 1.O | 53O | 9.5 |
| 2O | O.8 | 5OO | 9.4 |
| 3O | 1.O | 49O | 8.7 |
| 4O | 5.2 | 31O | 5.6 |

the iron oxide to the raw powder of LBA/CeO₂ stabilized ZrO₂ composite oxide changed. It is obvious from Table 2 that the sintered body with 5 to 3O wt% of iron oxide added thereto is excellent in terms of the porosity, the 4-point bending strength and the fracture toughness as compared with that with the iron oxide not added thereto.

A green body was prepared by adding a predetermined amount of iron oxide to the raw powder of LBA/CeO₂ stabilized ZrO₂ composite described above, said green body was sintered at a temperature of about 14OO ^{o}C to prepare several kinds of sintered bodies. A sliding testing plate having a size of 65 mm x 15 mm x 1O mm was processed from each of the sintered body. At this time, a 1O-measurements average roughness Rz of the surface of 65 mm x 15 mm was finished to be less than O.4 µm. 0n the other hand, as the other element with respect to the sliding testing plate, a sliding testing pin having a diameter of 8 mm, a length of 25 mm, a radius curvature of a hemispherical end surface of 18 mm was processed from a cast iron.

The sliding testing pin was vertically set up on the sliding testing plate. The sliding test for reciprocating of the testing pin on the surface of the sliding testing plate while being lubricated with a synthetic oil was conducted to measure a frictional coefficient. The sliding conditions used at this time are as follows: The sliding speed of the sliding testing pin is O.262 m/sec; the load applied to the sliding testing pin is 1 kgf; and the temperature of the sliding portion is 15O ^{o}C.

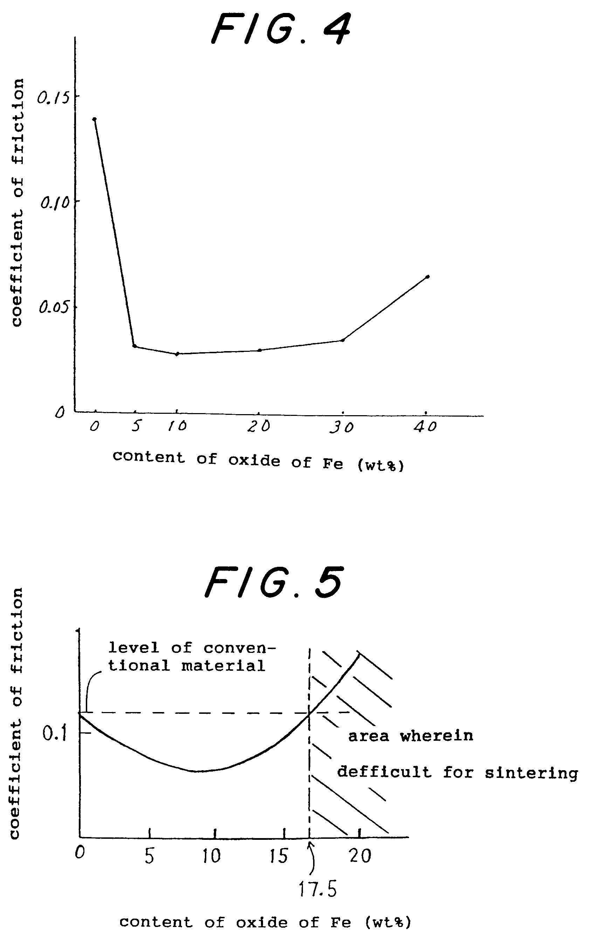

Fig. 4 shows the measured results of the frictional coefficient of the sintered substance according to the present invention, from the aforementioned sliding test. It is apparent from Fig. 4 that the raw material of the sintered substance in which 5 to 3O wt% of iron oxide was added to the raw powder of the LBA/CeO₂ stabilized ZrO₂ composite oxide lowers in the fictional coefficient. It is considered that the lowering of the frictional coefficient of the sintered substance results from the fact that the wettability for a lubricating oil is enhanced by the iron oxide and a film of the lubricating oil is formed on the surface of the sliding testing plate.

It is assumed that in the case where the addition amount of the iron oxide with respect to the raw powder of the LBA/CeO₂ stabilized ZrO₂ composite oxide is set to 4O wt%, pores within the sintered body increase, and unevennesses are formed on the surface of the sintered body so that the frictional coefficient becomes large.

### SEC0ND EMB0DIMENT

In the low frictional composite material used for a sliding member according to the present invention, O to 2O wt% (except O wt%) of Fe₃O₄ is contained in a matrix of Fe. The low frictional composite material according to the present invention is prepared by producing a green body from a mixture between a Fe powder and a Fe₃O₄ powder and a P powder and a Ni powder, said green body being sintered. The P powder and the Ni powder are used as an assistant in order to make the structure of the sintered substance fine.

Fig. 5 shows, in the low frictional composite material according to the present invention, the relationship between the addition amount of Fe₃O₄ to the matrix of Fe and the frictional properties. In Fig. 5, the abscissa and ordinate represent the addition amount of Fe₃O₄ to the matrix of Fe and the frictional coefficient, respectively. It is understood from Fig. 5 that the frictional coefficient of the low frictional composite material according to the present invention is smaller than that of the conventional composite material when the addition amount of Fe₃O₄ to the matrix of Fe is O to 17.5 wt% (except O wt%). In particular, when the addition amount of Fe₃O₄ to the matrix of Fe is about 1O wt%, the frictional coefficient is smallest.

The reason why when the addition amount of Fe₃O₄ to the matrix of Fe exceeds about 1o wt%, the frictional coefficient becomes large seemingly results from the fact that as the addition amount of Fe₃O₄ to the matrix fo Fe increases, the sinterbility for the low frictional composite material is deteriorated so that the surface of the sintered substance becomes rough. Accordingly, preferably, the addition amount of Fe₃O₄ to the matrix of Fe is O to 17.5 wt% (except O wt%), more preferably, about 1O wt%.

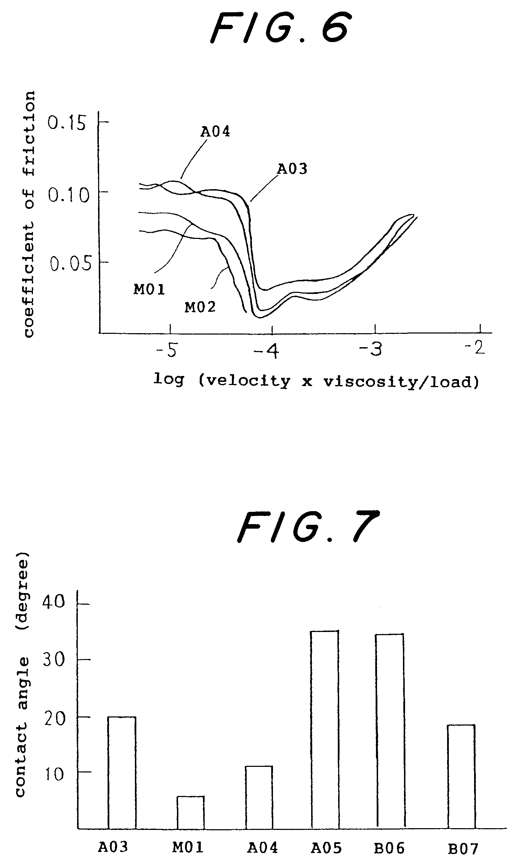

Fig. 6 shows friction properties of the low frictional composite material used for a sliding member according to the present invention and the conventional composite materials. In Fig. 6, the abscissa and ordinate represent a logarithm of ((velocity x viscosity)/load) and a frictional coefficient, respectively. The low frictional composite material according to the present invention represented by line M01 in Fig. 6 contains 1O wt% of Fe₃O₄ in the matrix of Fe. The low frictional composite material according to the present invention represented by line M02 in Fig. 6 has mica dispersed in the low frictional composite material represented by line M01. Mica as a solid lubricant functions to lower the friction coefficient during sliding.

The low frictional composite material according to the present invention represented by lines M01 is prepared by producing a green body from a mixture of 79,2 wt% of a Fe powder 1O.O wt% of Fe₃O₄ powder, O.8 wt% of a P powder and 1O.O wt% of a Ni powder, said green body being sintered. The P powder and the Ni powder are used as sintering agents in order to make the structure of the sintered body fine.

The conventional material represented by line A03 in Fig. 6 is cast iron, and the conventional composite material represented by line A04 in Fig. 6 contains 35 wt% of Fe₃O₄ in a matrix of Al₂O₃. It is understood from Fig. 6 that any of the low frictional composite material according to the present invention is small in value of the logarithm of ((velocity x viscosity)/load), i.e., is small in the frictional coefficient in the so-called boundary lubricating area and the mixed lubricating area, as compared with the conventional low frictional composite material. Further, the low frictional composite material represented by line M02 in Fig. 6 in which mica as a solid lubricant is dispersed is further smaller in frictional coefficient than that of the low frictional composite material represented by line M01.

Fig. 7 shows wettability of the low frictional composite material used for a sliding member according to the present invention with respect to a lubricating oil. In Fig. 7, the abscissa indicates the low frictional composite material M01 according to the present invention and the conventional composite materials A03 to A05, B06 and B07, and the coordinate indicates a contact angle formed between the material surface and the lubricating oil adhered to the material surface. The conventional composite material A03 is cast iron, and the material A04 contains 35 wt% of Fe₃O₄ in a matrix of Al₂O₃ similar to that represented by line A04 in Fig. 6. The material A05 is a material in which ZrO₂ is sprayed on the surface of a substrate, the material B06 is a material in which Cr is plated on the surface of cast iron as a substrate, and the material B07 is ion nitride cast iron. The materials A03 to A05 are used for a cylinder liner, and the materials B06 and B07 are used for a piston ring.

The low frictional composite material M01 according to the present invention shown in Fig. 7 contains 10 wt% of Fe₃O₄ in a matrix of Fe, similar to the material represented by line M01 in Fig. 6. It is understood from Fig. 7 that the low frictional composite material M01 according to the present invention is smallest in contact angle, and most excellent in the wettability with respect to the lubricating oil. As shown in Fig. 6, the reason why the frictional coefficient of the low frictional composite materials M01, M02 according to the present invention is smaller than that of the conventional composite materials A03, A04 results from the fact that the wettability of the low frictional composite material according to the present invention with respect to the lubricating oil is excellent.

Table 3 shows the examined results of the presence or absence of a component of detergent (CaCO₃) in the surface of the low frictional composite material according to the present invention, using ESCA and EPMA. In the low frictional composite material M01 containing Fe₃O₄ in a matrix of Fe according to the present invention, no component of detergent was detected on the surface of the material similar to the material A21 formed of cast iron. 0n the other hand, in the conventional material A32 using Si₃N₄ in a matrix phase and the A04 using Al₂O₃ in a matrix, the component of a detergent was apparently detected on the surface of the material. It is understood from the foregoing that in Fig. 7, the reason why the wettability of the low frictional composite material M01 according to the present invention with respect to the lubricating oil is most excellent results from the fact that the component of the detergent is not adhered to the material surface.

**Table 3**

| material | | Y/N if detergent (CaCO₃) detected |
|---|---|---|
| A21 | cast iron | N0 |
| A32 | Fe₃O₄-Si₃N₄ | YES |
| A04 | Fe₃O₄-Al₂O₃ | YES |
| M01 | Fe₃O₄-Fe | N0 |

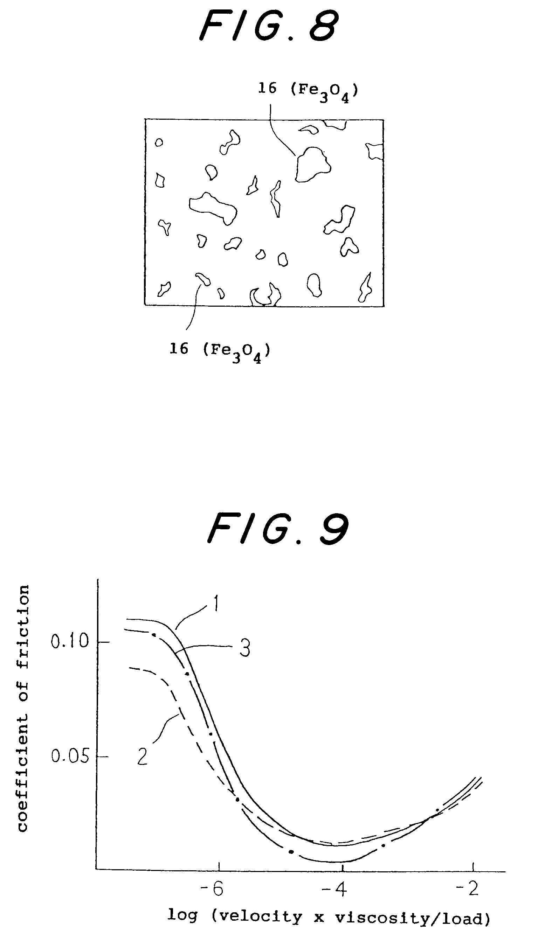

Fig. 8 schematically shows the structure of the low frictional composite material containing Fe₃O₄ in a matrix of Fe according to the present invention. As shown by numeral 16 in Fig. 8, it is understood that the Fe₃O₄ is dispersed in an island-like manner in the matrix of Fe.

It is to be noted that the similar characteristics can be obtained even if Fe sulfide, Fe nitride or Fe silicate, instead of Fe oxide, is added to the matrix of Fe.

### THIRD EMB0DIMENT

According to the present invention, the surface to be lubricated by a lubricating oil is formed of respective proper composite materials according to a boundary lubricating area (including a mixed lubricating area) and a fluid lubricating area, to minimize a frictional coefficient of a sliding member as a whole.

Table 4 shows the measured results of a contact angle of a lubricating oil with respect to a material usable as a sliding member. Plate materials A04 to A09, M01, A21, A31 to A33 are used for a cylinder liner, and pin materials B06 to B08 are used for a piston pin. The plate materials M01, A04, A31 to A33 formed of Fe₃O₄/Fe, Fe₃O₄/Al₂O₃, FeS/Al₂O₃, Fe₃O₄/Si₃N₄ and Fe-Si/Si₃N₄, respectively, are small in contact angle. That is, the composite materials M01, A04, A31 to A33 using the Fe oxide. Fe sulfide or compound of Fe and Si have the contact angle less than about 11 degrees and are excellent in wettability of the lubricating oil (it is to be noted that in the above, A/B represents the composite material in which grains of A is dispersed in the matrix of B). The materials A05 to A09 and A21 formed of ZrO₂, Al₂O₃, Cr₂O₃, Al₂O₃-ZrO₂ and Al₂O₃-Mg0 respectively, have the contact angle of about 25 degrees or more and have poor wettability of the lubricating oil. 0n the other hand, the pin material B07 formed of ion nitride iron is relatively small in contact angle and has a good wettability of lubricating oil. However, the pin materials B06 and B08 formed of Cr plated cast iron and Si₃N₄, respectively, is large in contact angle and has a poor wettability of lubricating oil.

Fig. 9 shows the friction characteristics of a combination of materials selected from Table 4. Fig. 9 is a so-called STRYIBECK curve, the abscissa and ordinate representing the logarithm of ((velocity x viscosity)/load) and the frictional coefficient, respectively. The line 1 of Fig. 9 represents the frictional coefficient of a combination of A21/B06 of materials in which cast iron is selected as a plate material and Cr plated cast iron is selected as a pin material, that is, a combination of materials of a material having a poor wettability of lubricating oil and a material having a poor wettability of lubricating oil. The line 2 of Fig. 9 represents the frictional characteristic of a combination of A21/B07 materials in which Fe₃O₄/Fe is selected as a plate material and ion nitride iron is selected as a pin material, that is, a combination of materials of a material having a poor wettability of lubricating oil and a material having a poor wettability of lubricating oil. The line 3 of Fig. 9 represents the frictional characteristic of a combination of A05/B07 of materials in which ZrO₂ is selected as a plate material and ion nitride iron is selected as a pin material, that is, a combination of materials of a material having a poor wettability of lubricating oil and a material having a good wettability of lubricating oil.

**Table 4**

| member | material | contact angle degree |
|---|---|---|
| plate A05 | ZrO₂ | 36 |
| plate A06 | Al₂O₃ | 39 |
| plate A07 | Cr₂O₃ | 33 |
| plate A08 | Al₂O₃-ZrO₂ | 39.5 |
| plate A09 | Al₂O₃-Mg0 | 37 |
| plate M01 | Fe₃O₄/Fe | 5 |
| plate A04 | Fe₃O₄/Al₂O₃ | 11 |
| plate A21 | cast iron | 25 |
| plate A31 | FeS/Al₂O₃ | 8.5 |
| plate A32 | Fe₃O₄/Si₃N₄ | 1O |
| plate A33 | Fe-Si/Si₃N₄ | 1O.5 |
| pin B06 | Cr plated cast iron | 32 |
| pin B07 | ion Fe nitrade | 19 |
| pin B08 | Si₃N₄ | 28 |

It is understood from the line 2 (a combination of materials M01/B07) in Fig. 9 that in the so-called boundary lubricating area and the mixed lubricating area where the value of the logarithm of ((velocity x viscosity/load) is small, the frictional coefficient of a combination of a material having a good wettabilty of lubricating oil and a material having a good wettability of lubricating oil is smaller than that of a combination of the other materials. It is understood from the line 3 (a combination of materials A05/B07) in Fig. 9 that in the so-called fluid lubricating area where the value of the logarithm of ((velocity x viscosity/load) is large, the frictionan coefficient of a combination of a material having a poor wettability of lubricating oil and a material having a poor wettability oil is smaller than that of a combination of the other materials. Accordingly, in the boundary lubricating area and the mixed lubricating area of the surface of the sliding member, a combination of Fe₃O₄/Fe and ion nitride iron (a combination of materials M01/B07) is used, and in the fluid lubricating area of the surface of the sliding member, a combination of ZrO₂ and ion nitride iron (a combination of materials A05/B07) is used, whereby the frictional coefficient of the surface of the sliding member can be made small as a whole.

As will be apparent from Table 4, instead of a combination of Fe₃O₄/Fe and ion nitride iron, a combination of Fe₃O₄/Al₂O₃ and ion nitride iron, a combination of FeS/Al₂O₃ and ion nitride iron, a combination of Fe₃O₄/Si₃N₄ and ion nitride iron, and a combination of Fe-Si/Si₃N₄ and ion nitride iron can be used to obtain the similar results.

Fig. 1O is a structural view in which the combination of the low frictional composite materials according to the present invention is applied to a cylinder liner whose substrate is cast iron. In the surface of a substrate 4 formed of cast iron of the cylinder liner 1O, a boundary lubricating area and a mixed lubricating area (in the vicinity of T.D.C. of the piston) 7 is formed of a composite material 5 comprising Fe₃O₄/Fe having a good wettability, and a fluid lubricating area (in the intermediary between T.D.C. and B.D.C. of the piston) 8 is formed by spraying a composite material 6 comprising ZrO₂ having a poor wettability. The composite material 5 of boundary lubricating area and the mixed lubricating area (in the vicinity of T.D.C. of the piston) 7 can be formed of Fe₃O₄/Al₂O₃, FeS/Al₂O₃, Fe₃O₄/Si₃N₄ or FeSi/Si₃N₄, instead of Fe₃O₄/Fe.

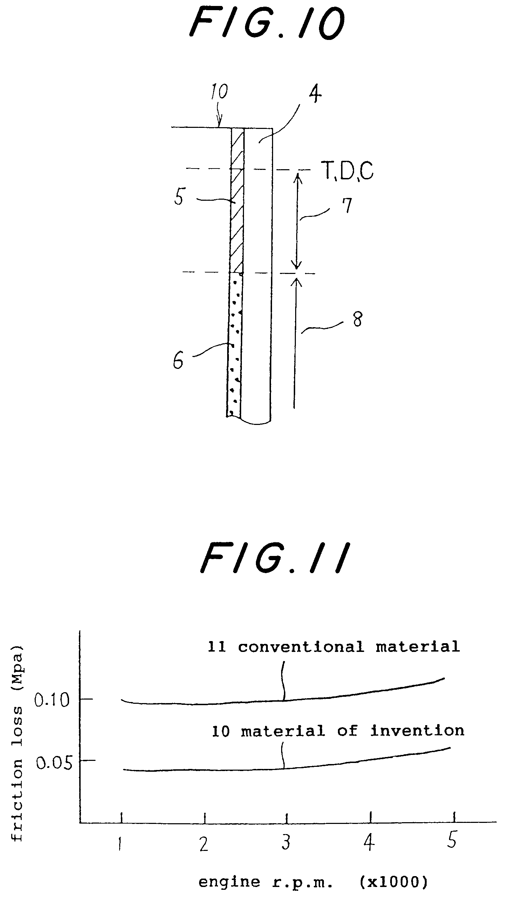

Fig. 11 shows the results of the measured frictional loss (indicated by pressure in cylinder) obtained by performing a bench test of the engine, using a cylinder liner 1O according to the present invention. That is, for the composite materials constituting the lubricating areas 7 and 8 of the surface of the substrate 4 of a cylinder liner 1O, a combination of Fe₃O₄/Fe and ZrO₂ was used, and for a piston ring, ion nitride cast iron was used. As can be seen from Fig. 11, in the overall running or operating area of the engine, the frictional loss of the engine when the cylinder liner 1O formed of the composite material according to the present invention is reduced to one half of the frictional loss of the engine when a cylinder liner 11 formed of the conventional composite material. Accordingly, the cylinder liner 1O formed of the composite material according to the present invention has a sufficient function as a low frictional sliding member.

As the composite material used for a cylinder liner, a combination of Fe₃O₄/Al₂O₃ and ZrO₂, a combination of FeS/Al₂O₃ and ZrO₂, or a combination of Fe₃O₄/Si₃N₄ and ZrO₂ can be used, instead of a combination of Fe₃O₄/Fe and ZrO₂, to obtain a good frictional characteristic.

### Effect of the Invention

According to the present invention, since the raw material comprises CeO₂ stabilized ZrO₂, α-Al₂O₃, La₂O₃ β-Al₂O₃ and iron oxide, it is possible to obtain a low frictional composite material for a wear resistant sliding member, which can be sintered at a lower temperature than that of prior art, and which is low in porosity, high in mechanical strength and fracture toughness, and small in frictional coefficient.

The low frictional composite material for a sliding member according to the present invention contains an oxide of Fe of less than 17.5 wt% in matrix containing Fe. Therefore, a component of detergent contained in a lubricating oil is hard to adhere to the surface of material, a formation of an oil film on the material surface is not impeded, and a frictional coefficient during sliding can be minimized. Further, Fe being the matrix, it is possible to maintain a wear resistance and a low friction property for a long period of time against severe sliding-conditions.

According to the present invention, since a material suitable for the lubricating condition or lubrication area is disposed on the surface of the sliding member, the frictional coefficient can be made small over the whole surface of the sliding member. Particularly, in the case where a combination of the low frictional composite materials according to the present invention is used for the cylinder liner of the engine, and a material having a good wettability is used for the piston ring, it is possible to reduce the frictional loss to about one half of prior art over substantially whole running operating area of the engine to withstand the use for a long period of time.

### BRIEF DESCRIPTI0N 0F THE DRAWINGS

Fig. 1 is a view of the structure of a conventional low frictional composite material.

Fig. 2 is a view of the structure of a conventional low frictional composite material.

Fig. 3 is a view of the structure of a low frictional composite material according to a first embodiment of the present invention.

Fig. 4 is a diagram showing a relationship between an addition amount of iron oxide and a frictional coefficient in connection with the low frictional composite material according to the first embodiment of the present invention.

Fig. 5 is a diagram showing a relationship between an addition amount of iron oxide and a frictional coefficient in connection with the low frictional composite material according to a second embodiment of the present invention.

Fig. 6 is a diagram showing frictional characteristics of the low frictional composite material according to the second embodiment of the present invention and the conventional composite material.

Fig. 7 is a diagram showing contact angles of a lubricating oil with respect to the low frictional composite material according to the second embodiment of the present invention and the conventional composite material.

Fig. 8 is a view of the structure of the low frictional composite material according to the second embodiment of the present invention.

Fig. 9 is a diagram showing frictional characteristics of mutual low frictional composite materials according to the present invention.

Fig. 1O is a sectional view in front of a cylinder liner of the engine making use of frictional characteristics of mutual low frictional composite materials according to the present invention.

Fig. 11 is a diagram showing a relationship between the number of revolutions of the engine and the frictional loss.

## Claims

1. A low frictional composite material for a sliding member characterized in that in a low frictional sliding member used together with a lubricating oil, a boundary lubricating area and a mixed lubricating area of the surface of said sliding member are formed of a first material having a first contact angle with respect to a lubricating oil adhered to said surface, and a fluid lubricating area of the surface of said sliding member is formed of a second material having a second contact angle larger than the first contact angle with respect to said lubricating oil adhered to said surface.

2. A low frictional composite material for a sliding member according to claim 1, wherein said first contact angle is less than about 11 degrees, and said second contact angle is more than about 25 degrees.

3. A low frictional composite material for a sliding member according to claim 1, wherein said first material is one composite selected out of *Fe₃O₄/Fe, Fe₃O₄/Al₂O₃, FeS/Al₂O₃, Fe₃O₄/Si₃N₄, Fe-Si/Si₃N₄. (*This represents that Fe₃O₄ particles are dispersed in Fe. This note is also applied to others).

4. A low frictional composite material for a sliding member according to claim 1, wherein said second material is one composite material selected out of ZrO₂, Al₂O₃, Cr₂O₃, Si₃N₄, Al₂O₃-ZrO₂, Al₂O₃-MgO and Cr plated cast iron.

5. A low frictional composite material for a sliding member according to any of claims 1 to 4, wherein said low frictional sliding member is a cylinder liner of engine.

6. A low frictional composite material for a sliding member according to any of claims 1 to 5, wherein said low frictional composite material is a cylinder liner and a piston ring of engine, said first material being disposed on the vicinity of the opposite ends of said cylinder liner, said second material being disposed on the intermediate portion of the liner, and Fe nitride ion being disposed on said piston ring.
